# EUROPEAN PATENT SPECIFICATION

(11) **EP 4 449 166 B1**
(45) Date of publication and mention of the grant of the patent: **17.12.2025**
(21) Application number: 22701464.4
(22) Date of filing: 05.01.2022
(51) Int. Cl.: G01W 1/00, H04B 7/185

(54) **METHOD AND APPARATUS FOR WEATHER DETECTION USING SATELLITES**
VERFAHREN UND VORRICHTUNG ZUR WETTERDETEKTION MITTELS SATELLITEN
PROCÉDÉ ET APPAREIL DE DÉTECTION MÉTÉOROLOGIQUE À L'AIDE DE SATELLITES

(43) Date of publication of application: 23.10.2024
(73) Proprietor: VIASAT INC., Carlsbad, California 92009 (US)
(72) Inventor: SPELLMAN, Roger I., Carlsbad, California 92009 (US); DI MAIO, Nazario, Carlsbad, California 92009 (US)
(74) Representative: Swindell & Pearson Limited
(86) International application number: PCT/US2022/011268
(87) International publication number: WO 2023/132823

(56) References cited:
- US-A1- 2020 257 020
- US-A1- 2021 073 659

## Description

### TECHNICAL FIELD

A technique relies on the computation of a weather metric to detect weather conditions affecting service in corresponding satellite service areas, where the weather metric is based on evaluating monitored values of a satellite-link parameter in relation to a reference value determined from past evaluations.

### BACKGROUND

"Rain fade" in the context of satellite communication systems refers to signal attenuation that occurs with certain atmospheric conditions, such as rain, sleet, or snow. Rain fade may reduce throughput between a satellite and the subscriber terminals located within an affected service area, or, in more severe cases, cause service outages. Ku and Ka bands are particularly susceptible to rain fade, but the phenomenon is of concern over a range of signal frequencies.

Exemplary approaches to detecting weather conditions affecting satellite service are known. An example satellite weather detection system uses atmospheric precipitation density data. Data, such as upstream transmit power, downstream signal strength or signal-to-noise ratio (SNR) can be collected and normalized and compared with current atmospheric data, for detecting storms, for example. See U.S. Patent No. 8,730,086 B2 and U.S. Patent No. 9,091,763 B2.

However, there remains a need for techniques that yield weather metrics on an automated basis and of sufficient reliability and granularity, for application to one or more functions of a satellite communication network.

US 2020/0257020 A1 discloses a method for determining at least one meteorological quantity for describing a state of atmospheric water.

US 2021/0073659 A1 discloses a method and a system for determining a weather impact score for geographic areas within a coverage area of a satellite.

### SUMMARY

A technique relies on the computation of a weather metric to detect weather conditions affecting a satellite service area, where the weather metric is based on evaluating monitored values of a satellite-link parameter in relation to a reference value. The reference value can be understood as representing a clear-sky value as determined from past evaluations of the satellite-link parameter-historical monitoring-for the satellite service area. Basing the reference value on the past evaluations made for the service area provides an advantageous, relative basis on which to evaluate ongoing weather conditions. One example application of the technique is the detection of weather outages, e.g., for determining compliance-exceptions with respect to Service Level Agreements (SLAs) between the involved satellite-service provider and subscribers covered by the SLAs. Other example applications include controlling scheduling or load balancing in the involved satellite communication system.

One embodiment comprises a method of operation by a computer system. The method includes determining a weather metric for each of one or more service areas of a satellite communication system, with respect to each of one or more time intervals. For each service area and time interval, the weather metric is determined based on: receiving monitored values of a satellite-link parameter, as monitored for a population of subscriber terminals in the service area, for the time interval; computing an evaluation value as a function of the monitored values; and computing the weather metric as a function of the evaluation value and a reference value that is determined from a plurality of past evaluation values computed for the service area with respect to a plurality of previous time intervals.

Another embodiment comprises a computer system that includes interface circuitry and processing circuitry. The processing circuitry is operative to determine a weather metric for each of one or more service areas of a satellite communication system, with respect to each of one or more time intervals, wherein, to compute the weather metric for each service area and time interval, the processing circuitry is configured to: receive, via the interface circuitry, monitored values of a satellite-link parameter, as monitored for a population of subscriber terminals in the service area, for the time interval; compute an evaluation value as a function of the monitored values; and compute the weather metric as a function of the evaluation value and a reference value that is determined from a plurality of past evaluation values computed for the service area with respect to a plurality of previous time intervals.

Of course, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Figure 1 is a block diagram of a satellite communication system according to an example embodiment.
Figure 2 is a block diagram of a computer system according to an example embodiment.
Figures 3A and 3B are diagrams of example time-interval structures used for computing evaluation and reference values, for weather-metric determinations.
Figures 4 and 5 are logic flow diagrams of methods of operation by a computer system according to example embodiments.
Figure 6 is a plot illustrating example behavior of a satellite-link parameter with respect to weather, for a population of subscriber terminals in a service area of a satellite communication system.
Figure 7 is a plot illustrating a weather metric computed in dependence on the behavior of the satellite-link parameter depicted in Figure 6.

### DETAILED DESCRIPTION

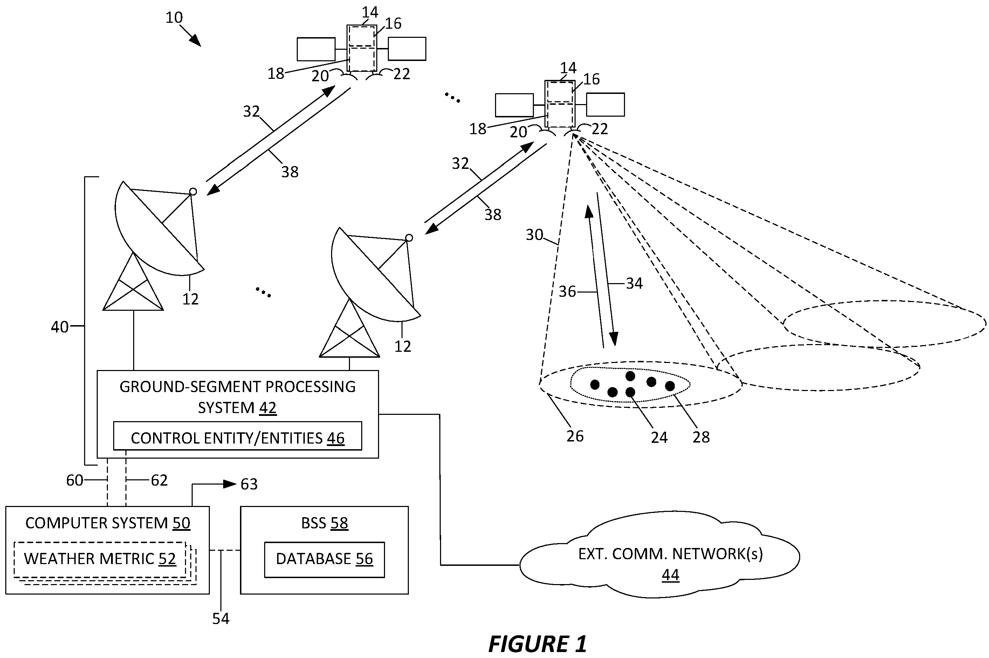

Figure 1 illustrates a satellite communication system 10-"system 10"-according to an example embodiment. The computation and use of "weather metrics" as disclosed herein are not limited to the particular system arrangement depicted in Figure 1, but the diagram offers useful example details for discussion.

The example system 10 includes one or more terrestrial gateway terminals 12, which may be referred to as "gateway terminals," or "gateway stations" or "access nodes," or simply as "gateways" for convenience. The example system 10 further includes one or more satellites 14, e.g., the system 10 may include a constellation of satellites 14. Each satellite 14 includes a bus 16 comprising the infrastructure of the satellite 14, including power systems. Each satellite 14 further includes a payload 18. The payload 18 is the communications package carried by the satellite 14 and it includes or is associated with antennas 20 for receiving from and transmitting to one or more respective ones of the gateways 12, and with antennas 22 for receiving from and transmitting to subscriber terminals 24 in one or more service areas 26.

The subscriber terminals 24 in a given service area 26 may be regarded as a population 28 of subscriber terminals 24. Each service area 26 may be the terrestrial footprint of an antenna beam 30 formed by a respective satellite 14 or by the system 10, at large. However, a service area 26 may correspond to more than one antenna beam 30, e.g., beams 30 having partially overlapping ground coverage areas or "footprints." Some service areas 26 may be smaller or larger than others. For example, a multiplicity of smaller service areas 26 may be used to serve geographic regions having higher densities of subscriber terminals 24, whereas a single large service area 26 may be used for a geographic region having a low density of subscriber terminals 24.

At least some of the subscriber terminals 24 may be stationary, fixed-location terminals, such as used for television or other broadband services provided via the system 10. A single subscriber may own or lease multiple subscriber terminals 24 and may use one or more communication services provided through the system 10, e.g., under a Service Level Agreement (SLA) between the operator of the system 10 and the subscriber. The subscriber may be an individual or an organization, such as a company.

The payload 18 in each satellite 14 in the system 10 comprises, for example, one or more transponders. Each transponder provides a signal pathway through the satellite 14 and includes receiver circuitry and corresponding transmitter circuitry, e.g., for relaying a received signal at the same or a translated frequency. The payload 18 may include switching circuitry for selectively coupling respective ones of the transponders with selected antenna feeds corresponding to respective coverage areas associated with the gateways 12 and the subscriber terminals 24. The transponders may be configured as non-processed signal pathways, which may perform frequency translation and other signal conditioning, but which relay received signals as retransmitted signals, without intervening demodulation and regeneration.

Regardless of whether the satellites 14 use non-processed or processed signal pathways, the system 10 provides forward channels and return channels. Between a given gateway 12 and a given satellite 14, the forward channel comprises a forward-channel uplink 32, representing a wireless uplink coupling between the gateway 12 and the satellite 14, and a forward-channel downlink 34, representing a wireless downlink coupling between the satellite 14 and subscriber terminals 24 in a respective service area 26. Each satellite 14 may provide multiple forward-channel downlinks 34, corresponding to respective service areas 26. Correspondingly, with respect to each service area 26, the return channel comprises a return-channel uplink 36, representing wireless uplink couplings between the respective subscriber terminals 24 in the service area 26 and the satellite 14. The return channel further comprises a return-channel downlink 38, representing a wireless downlink coupling between the satellite 14 and the gateway 12.

Along with the gateways 12, a ground segment 40 of the system 10 includes a ground-segment processing system 42, which handles communication-signal processing and interfaces, for example, with one or more external communication networks 44. The external network(s) comprise, for example, any one or more of the Public Switched Telephone Network (PSTN), the Internet, or other Packet Data Network (PDN). The external communication network(s) 44 operate as a source for user traffic provided to respective subscriber terminals 24, for example.

The ground-segment processing system 42, which may be distributed or centralized with respect to the gateways 12, includes or is associated with one or more control entities 46. The control entities 46 are configured, for example, to perform any one or more of scheduling and dynamic load balancing within the system 10. "Scheduling" refers to the scheduling of user traffic to/from respective subscriber terminals, e.g., according to system loading and a defined scheduling objective that considers, for example, fairness, link throughput, service prioritization, subscriber prioritization, etc. "Load balancing" refers to steering traffic flows for better bandwidth utilization across beams 30 and satellites 14.

The ground segment 40 includes or is communicatively coupled with a computer system 50, e.g., a networked server, which is configured to compute weather metrics 52 for one or more service areas 26 of the system 10. For example, the computer system 50 is configured to compute a weather metric 52 for each of one or more service areas 26 of the system 10 on an hourly basis or according to some other recurring time interval, e.g., every five minutes, every half-hour, every two hours, or some other temporal granularity.

Broadly, the computer system 50 is configured to determine a weather metric 52 for each of one or more service areas 26, with respect to each of one or more time intervals. Each time interval comprises a periodically recurring time interval or any particular one in a contiguous succession of like time intervals, and the computer system 50 may determine weather metrics on either or both such time-interval definitions.

A periodically recurring time interval is, for example, a time slice that recurs on a daily basis, such as the same hour every day, the same half-hour every day, etc. A time interval in a contiguous succession of time intervals is, for example, any given five-minute window in a running succession of five minute intervals. Of course, the running intervals may have a different granularity, such as ten minutes, quarter-hours, etc. The point to understand is that "time interval" refers to a particular window of time, such that the phrase "previous time intervals" refers to like windows of time that precede the particular window of time in question. Thus, taking an example time interval as being as any given five-minute window, a plurality of time intervals that are "previous" to that given five-minute window may be a contiguous succession of earlier five-minute windows according, or may be that set of five-minute windows occurring at the same time of day, over some number of most recent days. The computer system 50 in one or more embodiments may compute weather metrics 52 on either or both understandings of "time interval" and "previous time intervals."

In one or more embodiments, the computer system 50 is configured to output weather-metric information as signaling 54 to a database 56. The database 56 may be local to the computer system 50 or, in the depicted example, may be remote to the computer system 50, e.g., hosted in a remote Business Support System (BSS) 58. The BSS 58 may be another networked server. The weather-metric information comprises, for example, the one or more weather metrics 52 computed by the computer system 50 or evaluation results corresponding thereto. For example, evaluating a particular weather metric 52 as computed for a particular service area 26 and for a particular time interval comprises determining whether the value of the weather metric 52 indicates the presence of weather. More particularly, the evaluation in one or more embodiments includes determining whether the weather metric 52 indicates service impairment, e.g., based on the numeric value of the weather metric 52 being below (or above) a defined threshold value that corresponds to substantive service impairment.

In one or more embodiments, the computer system 50 receives signaling 60 that originates from the ground segment 40 and conveys monitored values of a satellite-link parameter, e.g., for respective populations 28 of subscriber terminals 24 in corresponding service areas 26 of the system 10. Here, any number of measurements or indicators of link quality between a satellite 14 and respective subscriber terminals 24 in a population 28 may serve as the satellite-link parameter that is used for computation of the weather metrics 52. Example parameters include subscriber-terminal transmit power, received-signal SINR at the subscriber terminals 24 or at the satellite 14 with respect to the subscriber terminals 24.

Another example parameter is "Home Channel Symbol Rate" or HCSR. Example details for HCSR appear in U.S. Patent No. 8,547,863 B2. Each subscriber terminal 24 may be assigned to a "home channel," with the effective isotropic radiated power (EIRP) or other parameter of the subscriber terminal 24 adjusted based on measuring signal quality on the home channel. Here, the home channel comprises, for example, a specific physical channel or carrier using the highest symbol rate at which the subscriber terminal 24 is capable of operating, according to limitations on error rates, etc.

The system 10 in one or more embodiments assigns subscriber terminals 24 to home channels that use the largest symbol rate possible. As noted in U.S. Patent No. 8,547,863 B2, the system 10 may power-control the individual subscriber terminals 24 to compensate for rain fade. However, with increasing rain-fade severity, the system 10 must begin reducing the HCSR of affected subscriber terminals 24. As such, monitored HCSR values for a population 28 of subscriber terminals 24 provides a good indication of weather conditions in the corresponding service area 26.

In at least one embodiment herein, the computer system 50 implements an advantageous technique for using monitored HCSR values or monitored values of another satellite-link parameter that reflects link adaptations made to compensate for rain fade, to compute and evaluate weather metrics 52. Through the use of "evaluation" and "reference" values described below, the weather-metric techniques disclosed herein offer a particularly reliable and automated mechanism for detecting and responding to weather impairments affecting one or more service areas 26 of the system 10.

In one or more embodiments, the computer system 50 is configured to output signaling 62 comprising control information for controlling operation of the system 10. For example, the signaling 62 indicates weather metrics 52 currently applicable to respective service areas 26 of the system 10, for use in load balancing or scheduling by the control entities 46 of the ground segment 40. The signaling 62 in at least one embodiment comprises commands for one or both of load balancing and scheduling, e.g., specifying particular load balancing or scheduling actions or strategies to be taken by the control entities 46 in the ground segment 40.

Additionally, or alternatively, the computer system 50 is configured to output signaling 63 comprising notifications, which may be alarms. The notifications comprising the signaling 63 may be sent to the BSS 58 or may be sent to other computer systems or devices associated with the system 10, e.g., computer systems or devices used by the operator of the system 10 for monitoring the health and operation of the system 10.

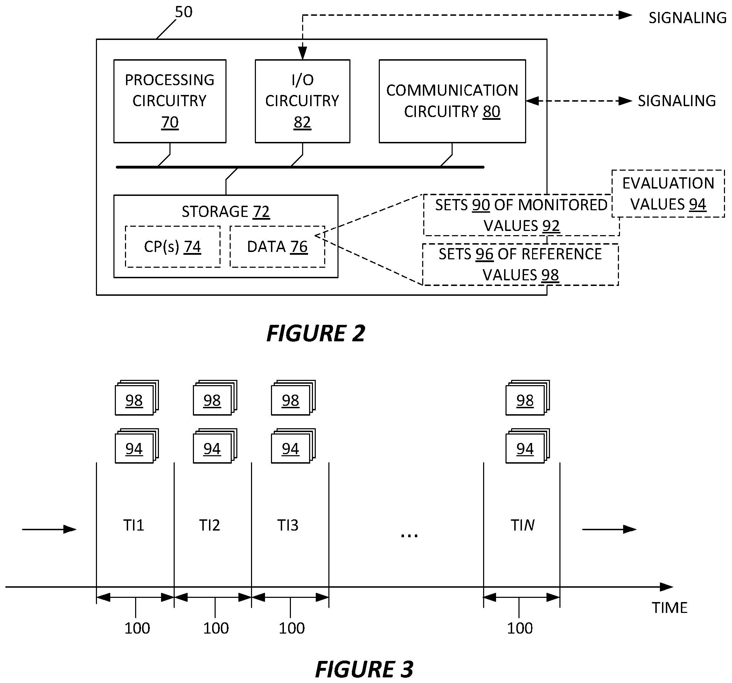

Figure 2 depicts example details for the computer system 50, according to one or more embodiments where the computer system 50 comprises processing circuitry 70 and associated storage 72 comprising one or more types of computer-readable media-e.g., SRAM or DRAM or other volatile storage and a hard drive or Solid State Disk (SSD) for non-volatile storage. The storage 72 holds, for example, one or more computer programs 74, shown as "CP(s)" in the diagram, and may also hold one or more types of data 76. In at least one embodiment, the processing circuitry 70 comprises one or more microprocessors that are specially adapted to carry out the weather-metric processing described herein, based on the execution of computer program instructions stored in the storage 72 as one or more computer programs 74.

Further example elements of the computer system 50 comprise communication circuitry 80 and input/output (I/O) circuitry 82, either or both of which may be referred to as "interface circuitry" to denote their role in providing communicative coupling between the computer system 50 and one or more external devices or systems. As an example, the communication circuitry 80 comprises an Ethernet interface or other data-networking interface and it communicatively couples the computer system 50 to the ground segment processing system 42, e.g., for receiving the signaling 60 and sending the signaling 62. The communication circuitry 80 in one or more embodiments also provides communicative coupling with the BSS 58. Alternatively, one or both the signaling 60 and 62 are provided via the I/O circuitry 82, which comprises, for example, interfacing with local input/output devices. The I/O circuitry 82 supports, for example, interface with local or remote video displays, keyboards, storage systems, etc., for operating monitoring, data recording, etc.

In at least one embodiment, the data 76 held in the storage 72 comprises one or more sets 90 of monitored values 92. Here, the monitored values 92 are monitored values of a satellite-link parameter, such as SINR, transmit power, HCSR, etc., corresponding to subscriber terminals 24 in one or more populations 28. Each population 28 can be understood as corresponding to a particular service area 26 of the system 10. Thus, a "set" 90 of monitored values 92 refers to the monitored values 92 collected for a particular population 28, for a particular time period-i.e., for a particular hour of the day or some other defined time interval. As such there may be multiple sets 90 of monitored values 92 for each service area 26 of interest, with each such set corresponding to a respective time interval.

The computer system 50 processes each such set 90 of monitored values 92 to obtain a corresponding evaluation value 94 that is used in the computation of a weather metric 52 for the corresponding service area 26 and time interval. The evaluation value 94 for a set 90 of monitored values 92 is computed as an average, for example, or as some other statistical measure. The computer system 50 need not maintain a given set 90 of monitored values 92 after determination of the corresponding evaluation value 94.

The data 76 in one or more embodiments further includes sets 96 of reference values 98. For example, there is a specific reference value 98 for each service area 26, for each time interval. The reference value 98 for a particular time interval and for a particular service area 26 may be understood as a "clear sky" value for that service area 26 and for that particular time interval-i.e., it is a value that reflects a historic performance of the population 28 of subscriber terminals 24 in that service area 26 in the absence of weather impairment. Here, the term "population" should be understood as allowing for changes in membership over time, i.e., a given population 28 does not necessarily have identical membership at all times.

In general, a population 28 represents a collection of subscriber terminals 24 that are associated with a respective service area 26, with respect to a given time interval. The computer system 50 in one or more embodiments is configured to ignore populations 28 of subscriber terminals 24 that are below or above certain population-size thresholds. Ignoring a population 28 of subscriber terminals 24 means not computing weather metrics 52 for that population 28.

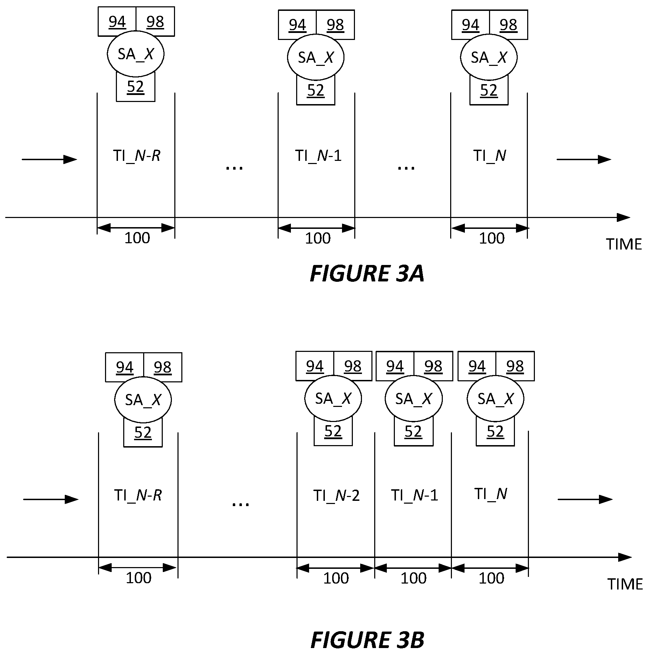

Figure 3A depicts an example time interval 100 that recurs periodically, e.g., hourly, or daily. The illustrated occurrences of the time interval 100 are labeled as "TI1," "TI2," and "TI3," although it should be understood that the diagram only illustrates a small snapshot of a running timeline. To compute the weather metric 52 for a given service area 26, denoted as "SA_*X*" in the diagram, with respect to a given time interval TI*_N,* the computer system 50 uses a reference value 94 computed from monitored values 92 obtained from subscriber terminals 24 for all or a portion of TI_*N*, and uses a reference value 98 that depends on the reference values 94 computed for SA_X for each previous time interval in a plurality of previous time intervals.

In this example, the previous occurrences of the time interval 100 that are considered are prior occurrences *TI_N-1* through TI_*N-R.* For example, if the time interval 100 is a particular hour of the day, R represents the number of previous days considered for computation of the reference value 98. For any given service area 26 and for any given time interval 100, the evaluation value 94 depends on monitored values 92 corresponding to the given time interval 100 and the reference value 98 depends on some number of reference values 94 computed for the same service area 26, for a plurality of previous time intervals 100.

Figure 3B illustrates time intervals 100 that are successive occurring-i.e., time intervals 100 in a running, contiguous series of like intervals, such as five-minute intervals, ten-minute intervals, or intervals of some other granularity. The computation of a weather metric 52 for any given service area 26, e.g., SA_*X*, for any given one of the time intervals 100 depends on a reference value 94 determined from monitored values 92 obtained for subscriber terminals 24 in SA_*X* for all or part of the time interval 100, and on a reference value 98 that is based on some number of reference values 94 computed for the same service area 26, for a plurality of previous time intervals 100. As compared to Figure 3A, the previous time intervals 100 may be taken as the R-most recent successive time intervals 100 in the running series of time intervals.

The computer system 50 may compute weather metrics 52 according to the time-interval structure of Figure 3A or 3B or may compute separate weather metrics 52 on each basis. Broadly, with either time-interval structure, the weather metric 52 computed for a particular service area 26 with respect to a particular time interval 100 is based on: (1) an evaluation value 94 computed for the particular service area 26 and for particular time interval 100 and (2) a reference value 98 computed for the particular service area 26, for some number of previous time intervals 100. Those previous time intervals 100 are "like" the particular time interval 100 in question at least because they are of the same duration and, as seen in Figure 3A, they may correspond to past instances of the same time of day.

With the example details of Figures 3A and 3B in mind, a computer system 50 according to one or more embodiments comprises interface circuitry 80 or 82 and processing circuitry 70. Here and elsewhere in this disclosure, unless specifically stated or clear from the context, "A or B" means A alone, B alone, or both A and B. The processing circuitry 70 is operative to determine a weather metric 52 for each of one or more service areas 26 of a satellite communication system 10, with respect to each of one or more time intervals 100.

To compute the weather metric 52 for any particular service area 26 with respect to any particular time interval 100, the processing circuitry 70 is configured to: (a) receive, via the interface circuitry 80 or 82, monitored values 92 of a satellite-link parameter, as monitored for a population 28 of subscriber terminals 24 in the service area 26, for the time interval 100; (b) compute an evaluation value 94 as a function of the monitored values 92; and (c) compute the weather metric 52 as a function of the evaluation value 94 and a reference value 98 that is determined from a plurality of past evaluation values 94 computed for the service area 26 with respect to a plurality of previous time intervals 100.

The weather metric 52 is a numeric value that is computed for a particular time interval 100 and service area 26, based on the applicable evaluation value 94 and the applicable reference value 98. "Applicable" means those values pertinent to the specific time interval 100 and the specific service area 26. Thus computed, the weather metric 52 indicates a presence, absence, or severity of weather impairment in the service area 26, with respect to the time interval 100. For example, the weather-metric computation yields a numeric value that falls within a defined range, where one end of the range corresponds to no weather impairment and the other end of the range corresponds to the "worst" weather impairment.

Each time interval 100 comprises a periodically recurring time interval or any particular one in a contiguous succession of like time intervals. In one example, the time intervals 100 of interest are hours of the day, such that the weather metric 52 computed for any given service area 26 with respect to any given hour in a particular day depends on the evaluation value 94 computed for that given hour on that particular day, and the applicable reference value 98 depends on the evaluation values 94 computed for the given service area 26, for some number of previous occurrences of that hour, e.g., over the past month.

The processing circuitry 70 in one or more embodiments is further configured to output signaling 54 to a database 56 via the interface circuitry 80 or 82. The signaling 54 indicates the one or more weather metrics 52 computed by the processing circuitry 70 or evaluation results corresponding thereto, along with time-stamp and service-area information.

The processing circuitry 70 in one or more embodiments is further configured to output signaling 62 to a control entity 46 in a ground segment 40 of the satellite communication system 10 via the interface circuitry 80 or 82. The signaling 62 indicates the one or more weather metrics 52 or evaluation results corresponding thereto, and the control entity 46 is operative to perform at least one of load balancing and transmission scheduling in the satellite communication system 10 in dependence on the signaling 62.

The processing circuitry 70 in one or more embodiments is further configured to output, via the interface circuitry 80 or 82, signaling 63 comprising one or more notifications, responsive at least to certain values of the one or more weather metrics 52. For example, the processing circuitry 70 controls the computer system 50 to output or initiate the outputting of one or more types of electronic signals, responsive to detecting that one or more weather metrics 52 are below (or above) a threshold associated with significant weather impairment. Examples of electronic signals include Short Messaging Service (SMS) messages, emails, or signals for computer displays, aural annunciators, visual annunciators, etc.

According to at least one embodiment, the reference value 98 for each service area 26 and each time interval 100 is a numeric value having a defined percental rank with respect to a corresponding plurality of past evaluation values 94 computed for the service area 26 with respect to a corresponding plurality of previous time intervals 100. Here, the corresponding plurality of past evaluation values 94 and the corresponding plurality of previous time intervals 100 are "applicable" evaluation values 94 and previous time intervals 100, within the meaning described above.

In one or more embodiments, the satellite-link parameter is an adaptable Home Channel Symbol Rate (HCSR). In such embodiments, for each service area (26) and each time interval 100, the monitored values 92 are HCSRs of respective ones of the subscriber terminals 24 in the service area 26 during all or a portion of the time interval 100. In at least one such embodiment, the evaluation value 94 for each service area 26 and time interval 100 is computed as a weighted average of HCSRs in use by respective numbers of subscriber terminals 24 operating in the service area 26.

The processing circuitry 70 in one or more embodiments is further configured to correlate service outage events detected for any particular service area 26 with indications of weather impairment for the particular service area 26, as indicated by corresponding weather metrics 52 computed for the particular service area 26.

The satellite communication system 10 comprises, for example, a plurality of service areas 26, and the processing circuitry 70 in one or more embodiments is configured not to compute weather metrics 52 for service areas 26 that are below a certain service-area size threshold, or not computing weather metrics 52 for service areas 26 above a certain service-area size threshold. Additionally, or alternatively, the processing circuitry 70 is configured not to compute weather metrics 52 for service areas 26 having populations 28 of subscriber terminals 24 below a certain population-size threshold. Additionally, or alternatively, the processing circuitry 70 is configured not to compute weather metrics 52 for service areas 26 having more than a threshold percentage of subscriber terminals 24 that are offline. Further, in one or more embodiments, the processing circuitry 70 is configured to exclude certain subscriber terminals 24 in the population 28 of subscriber terminals 24 from consideration in the computation of the evaluation value 94.

In at least one embodiment, the weather metric 52 is computed as a numeric value within a range bounded by a range minimum and a range maximum. One of the range minimum or range maximum corresponds to no weather impact and the other one of the range minimum or range maximum corresponds to a maximum weather impact. The weather metric 52 according to a particular embodiment has a maximum value corresponding to the absence of weather impairment and a lower threshold value corresponding to maximum weather impairment, with values below that lower threshold considered to be invalid as arising from faulty or insufficient input data-e.g., monitored values 92 from too small a population 28 of subscriber terminals 24.

In a more detailed example, a given time interval 100 of interest recurs on a daily basis. With respect to a particular service area 26, the processing circuitry 70 is configured to maintain the reference value 98 for the time interval 100 as a value having a defined percentile rank with respect to a plurality of past evaluation values 94 computed for the service area 26 with respect to previous occurrences of the time interval 100 over a defined number of most recent days. For example, the processing circuitry 70 computes the reference value 98 as the "p99" value with respect to a running plurality of past evaluation values 94 determined for a corresponding plurality of past occurrences of the time interval 100. The "p99" value is the 99th percentile value, meaning that it is better than ninety-nine percent of the reference values 94 in the plurality.

Other percentile ranks or other ranking schemes may be used to arrive at the reference value 98 to be used for computing a weather metric 52 for a specific service area 26 with respect to a particular time interval 100. For example, the reference value may be a maximum value or may be selected according to another metric. Further, it should be understood that, for any given service area 26, the reference value 98 for one time interval 100, e.g., a 6-7 AM interval, may be different than the reference value 98 computed for a different time interval 100, e.g., a 3-4 PM interval. A further point to recognize is that the computer system 50 may compute weather metrics 52 for different temporal granularities, e.g., it may maintain weather metrics 52 referenced to hourly intervals, but also may maintain weather metrics 52 referenced to shorter or longer intervals, such as ten-minute or five-minute intervals.

In one or more embodiments, the satellite-link parameter for which monitored values 92 are provided for weather-metric computation is an adaptable Home Channel Symbol Rate (HCSR). In such cases, the monitored values 92 of the satellite-link parameter are HCSRs of respective ones of the subscriber terminals 24 in the service area 26, during all or a portion of a time interval 100 of interest. The HCSR is "adaptable" in the sense that the system 10 controls it for respective subscriber terminals 24, e.g., setting it to the highest achievable rate for radio conditions of the respective subscriber terminals 24. The system 10 may operate with a limited set of possible HCSRs, such that each subscriber terminal 24 during normal operation is at the highest one of those possible HCSRs that can be supported in view of the radio conditions.

The processing circuitry 70 in at least one such embodiment is configured to compute the evaluation value 94 for a given time interval 100 and with respect to a given service area 26 as a weighted average of HCSRs. The weighting is dependent on the respective numbers of subscriber terminals 24 in the population 28 operating with respective ones among a defined set of HCSRs. That is, for a limited number of defined HCSRs, there may be some number of subscriber terminals 24 in the population 28 operating with a first one of the defined HCSRs, and another number of subscriber terminals 24 in the population operating with a second one of the defined HCSRs. Determining the average of the first and second HCSRs would, therefore, depend on the relative numbers of subscriber terminals 24 in the population 28 that are using the first and second HCSRs.

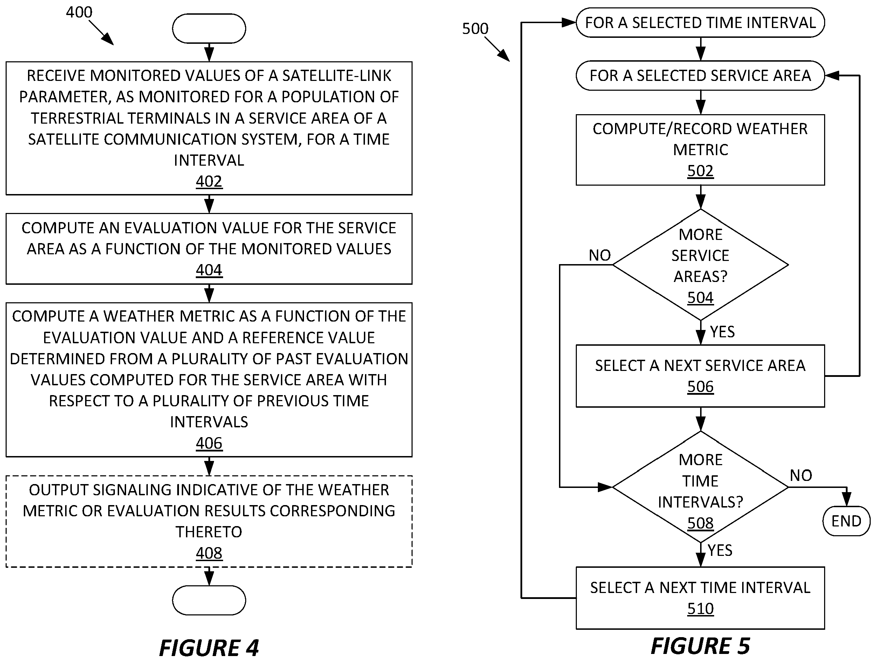

Figure 4 illustrates a method 400 of operation by a computer system, such as the computer system 50. The method 400 includes determining a weather metric 52 for each of one or more service areas 26 of a satellite communication system 10, with respect to each of one or more time intervals 100. For each service area 26 and time interval 100, the weather metric 52 is determined based on: (a) receiving (Block 402) monitored values 92 of a satellite-link parameter, as monitored for a population 28 of subscriber terminals 24 in the service area 26, for the time interval 100; (b) computing (Block 404) an evaluation value 94 for the service area 26 as a function of the monitored values 92; and (c) computing (Block 406) the weather metric 52 as a function of the evaluation value 94 and a reference value 98 determined from a plurality of past evaluation values 94 computed for the service area 26 with respect to a plurality of previous time intervals 100.

The method 400 in one or more embodiments further includes (d) outputting (Block 408) outputting signaling indicating the one or more weather metrics 52 or evaluation results corresponding thereto. One example of such signaling includes outputting signaling 54 to a BSS 58, e.g., to record the weather metrics 52 or the results of evaluating the weather metrics 52 in a database 56. Other examples include outputting signaling 62 to one or more control entities 46 in the ground segment 40 of the system 10, e.g., signaling to control load balancing or scheduling in the system 10 responsive to detected weather impairment, or outputting signaling 63, e.g., comprising notifications or alarms, for alerting the system operator or other responsible parties regarding detected weather impairment.

Thus, Block 408 can be understood as any one or more of:
- outputting signaling 54 to a database 56 indicating at least one of the weather metric or a result of evaluating the weather metric, along with time-stamp and service-area information;
- outputting signaling 62 to a control entity 46 in a ground segment 40 of the system 10, the signaling 62 indicating at least one of the weather metric or a result of evaluating the weather metric, and the control entity 46 operative to perform at least one of load balancing and transmission scheduling in the satellite communication system, in dependence on the signaling; or
- outputting notification signaling responsive at least to certain values of the weather metric.

The method 400 may be performed for each of one or more service areas 26 of the system 10, with respect to each of one or more time intervals 100. When considering multiple service areas 26, the method 400 may be performed in parallel for the multiple service areas 26, or carried out serially, one service area 26 at a time. Further, the method 400 can be invoked responsive to the passage of respective time intervals 100, e.g., at the end of each hour. However, the method 400 may be applied retrospectively, too, as long as the needed data is stored. Consider an example where the computer system 50 or another computer associated with the system 10 maintains historical sets 90 of monitored values 92 or maintains historical sets of evaluation values 94 derived from such sets 90 of monitored values 92. The computer system 50 can then compute a weather metric 52 for any time interval 100 in the past, provided there is sufficient stored data for determining the evaluation value 94 and reference value 98 for that time interval with respect to a service area 26 of interest.

Figure 5 illustrates a method 500 of operation by a computer system and may be understood as providing example details for implementation of the method 400. The illustrated processing applies for each of one or more service areas 26, with respect to each of one or more time intervals 100.

Processing "begins" with a selected time interval 100 and a selected service area 26 and includes computing and recording a weather metric 52 for the selected service area 26 with respect to the selected time interval 100. If there are further service areas 26 for which weather metrics 52 for the currently-selected time interval 100 are to be computed, processing continues with selecting a next service area 26 and computing the corresponding weather metric 52. Such operations repeat for the currently-selected time interval 100, for all service areas 26 to be evaluated. See Blocks 502, 504, and 506. The entire process then repeats for each further time interval 100 to be considered. See Blocks 508 and 510. Carrying the processing of Figure 5 with respect to multiple time intervals 100 and multiple service areas 26 thus results in a respective weather metric 52 for each service area 26 with respect to each time interval 100.

Using weather metrics 52 of the sort described above offers meaningful improvements in the functioning of a satellite communication system 10. For example, operators of satellite communication systems, i.e., service providers, oftentimes provide services to subscribers according to negotiated parameters regarding things like uptime, throughput, and other quality-of-service (QoS) metrics. These Service Level Agreements (SLAs) often specify monetary or other penalties for the service provider, for failing to meet the terms specified in a SLA. However, such agreements often have exceptions for service problems related to bad weather.

In at least one embodiment, the computer system 50 is configured to correlate service impairments, e.g., service outages experienced in any given service area 26 of the system 10 with detected weather events-i.e., as detected from the applicable weather metrics 52 computed for the given service area 26. Here, the "correlation" refers to determining whether service impairments experienced in a particular service area 26 during a particular time interval 100 coincide with the weather metric 52 computed for that service area 26 for that time interval 100 indicating the presence of weather impairment.

Among the several advantages of the weather-metric computation(s) disclosed herein is that the technique provides a simple, single metric that is related to the impact of weather on user beam or service area. Here, "related to" can be understood as meaning that the computed value of the weather metric 52 is at least somewhat proportional to the severity of the weather. Another advantage is that the weather metric 52 is not based on the count of subscriber terminals 24 within a service area 26 and, in fact, can be used to explain a drop in the count of online subscriber terminals 24 in a service area 26. Another notable point is that the weather metric 52 reflects weather conditions that actually impact satellite service.

In one or more example embodiments, a weather metric 52 is computed as a number from 0 to 100, where 100 represents no weather impact, and the lowest values represent severe weather impact. Example ranges are:
- from 95 to 100: no bad weather
- from 90 to 95: possible bad weather
- below 90: bad weather
- 0: invalid data, ignore weather metric.

In one or more embodiments, the weather metric 52 computed for a given service area 26 with respect to a given time interval 100 is based on subscriber-terminal distributions over different return-link HCSR. Here, return-link or "RL" refers to the uplinks from the subscriber terminals 24 to the satellite 14. For example, if the time intervals 100 are hours of the day, the weather metric 52 for a particular service area 26 with respect to a particular hour of the day is computed as:
- the weighted average of HCSR for the past 5 minutes, multiplied by 100, and divided by the p99 HCSR for the prior 30 days at the same hour of the day, for the particular service area 26.
In an example case, the highest possible HCSR is 160 and the lowest possible HCSR is 3. With those numbers, the weather metric 52 never goes below the value of 3, unless the data used for computing it is invalid. If the p99 HCSR for the previous week is 160, and the current HCSR is 3, the weather metric 52 depends on the fraction 3/160, which is about 3%, leading to weather metric 52 having the numeric value of 3.

The weighted average of HCSR for the past five minutes can be considered as an example of the evaluation values 94 described above, and the p99 HCSR can be considered as an example of the reference values 98 described above. In particular, the p99 HCSR can be considered as a clear-sky value, given that it is close to the maximum of weighted-average HCSRs observed for the particular service area 26 over the last 30 days, for the same hourly interval. The weighted average of HCSR for the subscriber terminals 24 in a population 28 in a service area 26 may be calculated based on how many subscriber terminals 24 in the population are at each one among a defined set of possible HCSRs.

In at least one embodiment, computation of the weather metric 52 for a given service area 26 and with respect to a particular time interval 100 does not consider all subscriber terminals 24 that are in the service area 26. That is, the population 28 of subscriber terminals 24 that is considered for weather-metric computation may be a "filtered" population that is determined from a larger population in which some subscriber terminals 24 are excluded from consideration. For example, subscriber terminals 24 that are newly entering the population 28 may not be a their optimum or stabilized HCSR and may be excluded. Similarly, subscriber terminals 24 that are performing "ranging" or other operations may be excluded from consideration for computation of the weather metric 52.

Other filtering may be performed at the service-area level. For example, the weather metric 52 may not be computed with respect to a particular service area 26 for a given time interval 100 if the number of subscriber terminals 24 that were online during the time interval 100 was below some fraction of the "usual" or expected number of subscriber terminals 24. Such filtering may be based on subscriber profiles or historic monitoring that provides a basis for knowing or estimating the expected number of online subscriber terminals 24. As an example, if the number of subscriber terminals 24 is less than eighty-percent of the expected number for any given service area 26 with respect to any given time interval 100, the weather metric 52 is not computed.

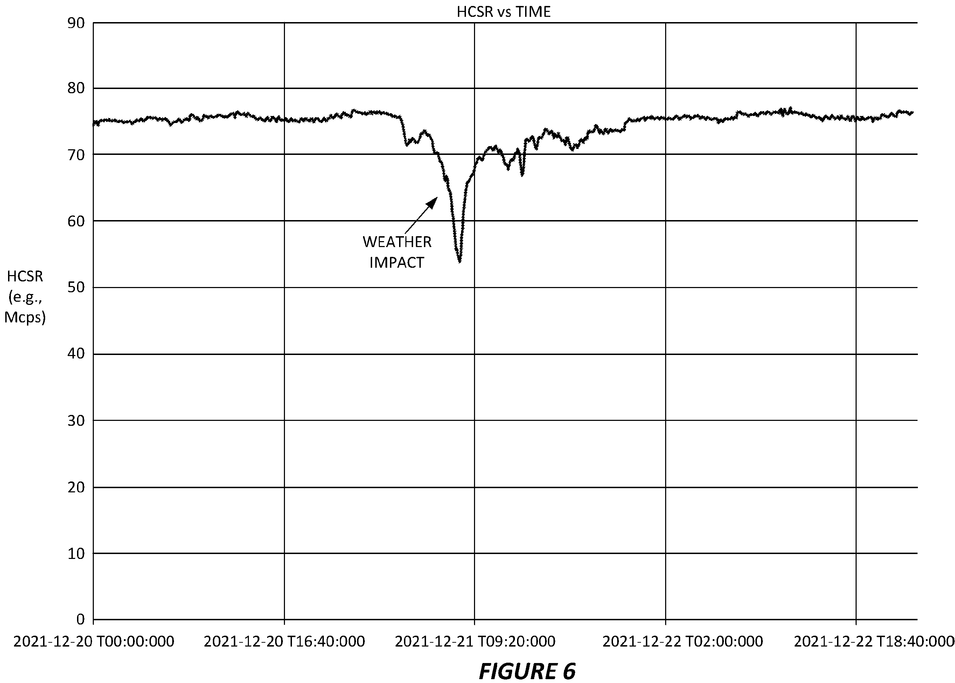

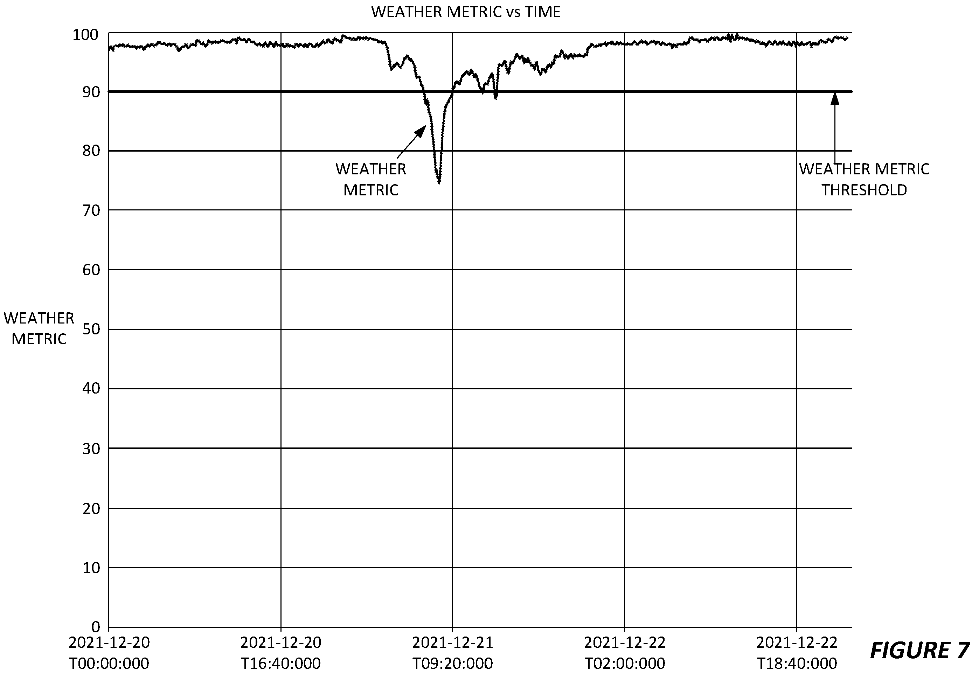

Figure 6 illustrates an example behavior of HCSR as an example satellite-link parameter, for a population 28 of subscriber terminals 24 in a given service area 26, e.g., a weighted average of the per-terminal HCSRs. Figure 7 illustrates corresponding example behavior of the weather-metric 52 computed for the overall population 28 of subscriber terminals 24 in the service area 26. The weather threshold indicative of severe weather is set at the 90% level, and the weather metric 52-also referred to as a weather score-remains above that level unless severe weather impacts the service area 26. Of course, numeric values and illustrated score behavior should be understood as examples applicable to the illustrated context.

Notably, modifications and other embodiments of the disclosed invention(s) will come to mind to one skilled in the art having the benefit of the teachings presented in the foregoing descriptions and the associated drawings. Therefore, it is to be understood that the invention(s) is/are not to be limited to the specific embodiments disclosed and that modifications and other embodiments are intended to be included within the scope of the appended claims. Although specific terms may be employed herein, they are used in a generic and descriptive sense only and not for purposes of limitation.

## Claims

1. A method (400) of operation by a computer system (50), the method (400) comprising:
determining a weather metric (52) for each of one or more service areas (26) of a satellite communication system (10), with respect to each of one or more time intervals (100), wherein, for each service area (26) and time interval (100), the weather metric (52) is determined based on:
receiving (402) monitored values (92) of a satellite-link parameter, as monitored for a population (28) of subscriber terminals (24) in the service area (26), for the time interval (100);
computing (404) an evaluation value (94) as a function of the monitored values (92); and **characterized in that** it is further based on:
computing (406) the weather metric (52) as a function of the evaluation value (94) and a reference value (98) that is determined from a plurality of past evaluation values (94) computed for the service area (26) with respect to a plurality of previous time intervals (100).

2. The method (400) according to claim 1, wherein each time interval (100) comprises one of:
a periodically recurring time interval; or
any particular one in a contiguous succession of like time intervals.

3. The method (400) according to claim 1 or 2, further comprising outputting (408) signaling (54) to a database (56) indicating the one or more weather metrics (52) or evaluation results corresponding thereto, along with time-stamp and service-area information.

4. The method (400) according to any of claims 1-3, further comprising outputting signaling (62) to a control entity (46) of the satellite communication system (10), the signaling (62) indicating the one or more weather metrics (52) or evaluation results corresponding thereto, the control entity (46) operative to perform at least one of load balancing and transmission scheduling in the satellite communication system (10) in dependence on the signaling (62).

5. The method (400) according to any of claims 1-4, further comprising outputting signaling (63) comprising one or more notifications, responsive at least to certain values of the one or more weather metrics (52).

6. The method (400) according to any of claims 1-5, wherein the plurality of past evaluation values (94) computed for a particular service area (26) with respect to the plurality of previous time intervals (100) comprises a running set of past evaluation values (94) corresponding to a running window of previous time intervals (100).

7. The method (400) according to any of claims 1-6, wherein the reference value (98) for each service area (26) and each time interval (100) is a numeric value having a defined percentile rank with respect to a corresponding plurality of past evaluation values (94) computed for the service area (26) with respect to a corresponding plurality of previous time intervals (100).

8. The method (400) according to any of claims 1-7, wherein the satellite-link parameter is an adaptable Home Channel Symbol Rate (HCSR), and wherein, for each service area (26) and each time interval (100), the monitored values (92) are HCSRs of respective ones of the subscriber terminals (24) in the service area (26) during all or a portion of the time interval (100), wherein, optionally, the evaluation value (94) for each service area (26) and each time interval (100) is computed as a weighted average of HCSRs in use by respective numbers of subscriber terminals (24) operating in the service area (26).

9. The method (400) according to any of claims 1-8, further comprising correlating service outage events detected for any particular service area (26) with indications of weather impairment for the particular service area (26), as indicated by corresponding weather metrics (52) computed for the particular service area (26).

10. The method (400) according to any of claims 1-9, wherein the satellite communication system (10) comprises a plurality of service areas (10), and wherein the method (400) further comprises at least one of:
not computing weather metrics (52) for service areas (26) that are below a certain service-area size threshold; or
not computing weather metrics (52) for service areas (26) above a certain service-area size threshold.

11. The method (400) according to any of claims 1-10, wherein the satellite communication system (10) comprises a plurality of service areas (10), and wherein the method (400) further comprises not computing weather metrics (52) for service areas (26) having populations (28) of subscriber terminals (24) below a certain population-size threshold.

12. The method (400) according to any of claims 1-11, wherein the method (400) further comprises, with respect to computing an evaluation value (94) for any particular service area (26) with respect to any particular time interval (100), excluding subscriber terminals (24) in the particular service area (26) that are newly entering the satellite communication system (10) from consideration.

13. The method (400) according to any of claims 1-12, wherein each weather metric (52) is computed as a numeric value within a range bounded by a range minimum and a range maximum, with one of the range minimum or range maximum corresponding to no weather impact and the other one of the range minimum or range maximum corresponding to a maximum weather impact.

14. A computer system (50) comprising:
interface circuitry (80, 82); and
processing circuitry (70) operative to determine a weather metric (52) for each of one or more service areas (26) of a satellite communication system (10), with respect to each of one or more time intervals (100), wherein, to compute the weather metric (52) for each service area (26) and time interval (100), the processing circuitry is configured to:
receive, via the interface circuitry (80, 82), monitored values (92) of a satellite-link parameter, as monitored for a population (28) of subscriber terminals (24) in the service area (26), for the time interval (100);
compute an evaluation value (94) as a function of the monitored values (92); and **characterized in that** it is further configured to compute the weather metric (52) as a function of the evaluation value (94) and a reference value (98) that is determined from a plurality of past evaluation values (94) computed for the service area (26) with respect to a plurality of previous time intervals (100).

15. The computer system (50) according to claim 14, wherein the processing circuitry (70) is configured, with the interface circuitry (80, 82), to perform the method of one or more of claims 2 to 13.

## Patentansprüche

1. Verfahren (400) eines Betriebs durch ein Rechnersystem (50), das Verfahren (400) umfassend:
Bestimmen von Wetterdaten (52) für jeden von einem oder mehreren Servicegebieten (26) eines Satellitenkommunikationssystems (10) in Bezug auf jedes von einem oder mehreren Zeitintervallen (100), wobei die Wetterdaten (52) für jedes Servicegebiet (26) und Zeitintervall (100) basierend auf Folgendem bestimmt werden:
Empfangen (402) von überwachten Werten (92) eines Satellitenverbindungsparameters, die für eine Population (28) von Teilnehmerendgeräten (24) in dem Servicegebiet (26) für das Zeitintervall (100) überwacht werden;
Berechnen (404) eines Bewertungswerts (94) abhängig von den überwachten Werten (92); und **dadurch gekennzeichnet, dass** es ferner auf Folgendem basiert:
Berechnen (406) der Wetterdaten (52) abhängig von dem Bewertungswert (94) und einem Referenzwert (98), der aus einer Vielzahl vergangener Bewertungswerte (94) bestimmt wird, die für das Servicegebiet (26) in Bezug auf eine Vielzahl früherer Zeitintervalle (100) berechnet werden.

2. Verfahren (400) nach Anspruch 1, wobei jedes Zeitintervall (100) eines von Folgenden umfasst:
ein periodisch wiederkehrendes Zeitintervall; oder
ein beliebiges eines in einer zusammenhängenden Folge von gleichen Zeitintervallen.

3. Verfahren (400) nach Anspruch 1 oder 2, ferner umfassend ein Ausgeben (408) von Signalen (54) an eine Datenbank (56), die die einen oder die mehreren Wetterdaten (52) oder entsprechende Bewertungsresultate zusammen mit Zeitstempel- und Servicegebietsinformationen angeben.

4. Verfahren (400) nach einem der Ansprüche 1-3, ferner umfassend ein Ausgeben von Signalen (62) an eine Steuerentität (46) des Satellitenkommunikationssystems (10), wobei die Signale (62) die einen oder die mehreren Wetterdaten (52) oder entsprechende Bewertungsresultate angeben, die Steuerentität (46) funktionsfähig ist, um in dem Satellitenkommunikationssystem (10) abhängig von den Signalen (62) mindestens eines von Lastausgleich und Sendeplanung durchzuführen.

5. Verfahren (400) nach einem der Ansprüche 1-4, ferner umfassend ein Ausgeben von Signalen (63), umfassend eine oder mehrere Benachrichtigungen als Reaktion auf zumindest gewisse Werte der einen oder der mehreren Wetterdaten (52).

6. Verfahren (400) nach einem der Ansprüche 1-5, wobei die Vielzahl von vergangenen Bewertungswerten (94), die für ein jeweiliges Servicegebiet (26) in Bezug auf die Vielzahl von vorherigen Zeitintervallen (100) berechnet werden, einen laufenden Satz von vergangenen Bewertungswerten (94) umfasst, die einem laufenden Fenster von vorherigen Zeitintervallen (100) entsprechen.

7. Verfahren (400) nach einem der Ansprüche 1-6, wobei der Referenzwert (98) für jedes Servicegebiet (26) und jedes Zeitintervall (100) ein numerischer Wert ist, der einen definierten Perzentilrang in Bezug auf eine entsprechende Vielzahl von vergangenen Bewertungswerten (94) aufweist, die für das Servicegebiet (26) in Bezug auf eine entsprechende Vielzahl von vorherigen Zeitintervallen (100) berechnet werden.

8. Verfahren (400) nach einem der Ansprüche 1-7, wobei der Satellitenverbindungsparameter eine anpassbare Heimkanalsymbolrate (HCSR) ist, und wobei, für jedes Servicegebiet (26) und jedes Zeitintervall (100), die überwachten Werte (92) HCSRs der jeweiligen Teilnehmerendgeräte (24) in dem Servicegebiet (26) während des gesamten oder eines Teils des Zeitintervalls (100) sind, wobei optional der Bewertungswert (94) für jedes Servicegebiet (26) und jedes Zeitintervall (100) als gewichteter Durchschnitt der verwendeten HCSRs durch die jeweilige Anzahl von Teilnehmerendgeräten (24), die in dem Servicegebiet (26) betrieben werden, berechnet wird.

9. Verfahren (400) nach einem der Ansprüche 1-8, ferner umfassend ein Korrelieren von Serviceausfallereignissen, die für ein jeweiliges Servicegebiet (26) erfasst werden, mit Angabe von Wetterbeeinträchtigung für das jeweilige Servicegebiet (26), wie sie durch entsprechende Wetterdaten (52) angegeben wird, die für das jeweilige Servicegebiet (26) berechnet werden.

10. Verfahren (400) nach einem der Ansprüche 1-9, wobei das Satellitenkommunikationssystem (10) eine Vielzahl von Servicegebieten (10) umfasst, und wobei das Verfahren (400) ferner mindestens eines von Folgenden umfasst:
kein Berechnen von Wetterdaten (52) für Servicegebiete (26), die unter einem gewissen Servicegebiet-Größenschwellenwert sind; oder
kein Berechnen von Wetterdaten (52) für Servicegebiete (26) oberhalb eines gewissen Servicegebiet-Größenschwellenwerts.

11. Verfahren (400) nach einem der Ansprüche 1-10, wobei das Satellitenkommunikationssystem (10) eine Vielzahl von Servicegebieten (10) umfasst, und wobei das Verfahren (400) ferner ein Nichtberechnen von Wetterdaten (52) für Servicegebiete (26) umfasst, die Populationen (28) von Teilnehmerendgeräten (24) unterhalb eines gewissen Population-Größenschwellenwert aufweisen.

12. Verfahren (400) nach einem der Ansprüche 1-11, wobei das Verfahren (400) ferner in Bezug auf ein Berechnen eines Bewertungswerts (94) für ein jeweiliges Servicegebiet (26) in Bezug auf ein jeweiliges Zeitintervall (100) ein Ausschließen aus einer Berücksichtigung von Teilnehmerendgeräten (24) in dem jeweiligen Servicegebiet (26), die neu in das Satellitenkommunikationssystem (10) eintreten, umfasst.

13. Verfahren (400) nach einem der Ansprüche 1-12, wobei alle Wetterdaten (52) als numerischer Wert innerhalb eines durch ein Bereichsminimum und ein Bereichsmaximum begrenzten Bereichs berechnet wird, wobei entweder das Bereichsminimum oder das Bereichsmaximum keiner Wetterauswirkung und das andere des Bereichsminimums oder des Bereichsmaximums einer maximalen Wetterauswirkung entspricht.

14. Rechnersystem (50), umfassend:
Schnittstellenschaltung (80, 82); und
Verarbeitungsschaltung (70), die funktionsfähig ist, um Wetterdaten (52) für jeden von einem oder mehreren Servicegebieten (26) eines Satellitenkommunikationssystems (10) in Bezug auf jedes von einem oder mehreren Zeitintervallen (100) zu bestimmen, wobei die Verarbeitungsschaltung zum Berechnen der Wetterdaten (52) für jedes Servicegebiet (26) und Zeitintervall (100) zu Folgendem konfiguriert ist:
Empfangen, über die Schnittstellenschaltung (80, 82), von überwachten Werten (92) eines Satellitenverbindungsparameters, die für eine Population (28) von Teilnehmerendgeräten (24) in dem Servicegebiet (26) für das Zeitintervall (100) überwacht werden;
Berechnen eines Bewertungswerts (94) abhängig von den überwachten Werten (92); und **dadurch gekennzeichnet, dass** es ferner konfiguriert ist, um die Wetterdaten (52) abhängig von dem Bewertungswert (94) und einem Referenzwert (98) zu berechnen, der aus einer Vielzahl vergangener Bewertungswerte (94) bestimmt wird, die für das Servicegebiet (26) in Bezug auf eine Vielzahl früherer Zeitintervalle (100) berechnet werden.

15. Rechnersystem (50) nach Anspruch 14, wobei die Verarbeitungsschaltung (70) mit der Schnittstellenschaltung (80, 82) konfiguriert ist, um das Verfahren nach einem oder mehreren der Ansprüche 2 bis 13 durchzuführen.

## Revendications

1. Procédé (400) de fonctionnement au moyen d'un système informatique (50), le procédé (400) comprenant :
la détermination d'un paramètre météorologique (52) pour chacune d'une ou plusieurs zones de service (26) d'un système de communication par satellite (10), par rapport à chacun d'un ou plusieurs intervalles de temps (100), pour chaque zone de service (26) et intervalle de temps (100), ledit paramètre météorologique (52) étant déterminé sur la base de :
la réception (402) de valeurs surveillées (92) d'un paramètre de liaison satellite, tel que surveillé pour une population (28) de terminaux d'abonnés (24) dans la zone de service (26), pendant l'intervalle de temps (100) ;
le calcul (404) d'une valeur d'évaluation (94) en fonction des valeurs surveillées (92) ; et **caractérisé en ce qu'**il est en outre basé sur :
le calcul (406) du paramètre météorologique (52) en fonction de la valeur d'évaluation (94) et d'une valeur de référence (98) qui est déterminée à partir d'une pluralité de valeurs d'évaluation antérieures (94) calculées pour la zone de service (26) par rapport à une pluralité d'intervalles de temps précédents (100).

2. Procédé (400) selon la revendication 1, chaque intervalle de temps (100) comprenant un intervalle parmi :
un intervalle de temps périodiquement récurrent ; ou
tout intervalle particulier dans une succession contiguë d'intervalles de temps similaires.

3. Procédé (400) selon la revendication 1 ou 2, comprenant en outre la sortie (408) d'une signalisation (54) vers une base de données (56) indiquant lesdits un ou plusieurs paramètres météorologiques (52) ou les résultats d'évaluation correspondant à celles-ci, conjointement avec des informations d'horodatage et de zone de service.

4. Procédé (400) selon l'une quelconque des revendications 1 à 3, comprenant en outre la sortie d'une signalisation (62) vers une entité de commande (46) du système de communication par satellite (10), la signalisation (62) indiquant lesdits un ou plusieurs paramètres météorologiques (52) ou des résultats d'évaluation correspondant à ceux-ci, l'entité de commande (46) servant à effectuer au moins une opération parmi l'équilibrage de charge et la planification de transmission dans le système de communication par satellite (10) en fonction de la signalisation (62).

5. Procédé (400) selon l'une quelconque des revendications 1 à 4, comprenant en outre la sortie d'une signalisation (63) comprenant une ou plusieurs notifications, répondant au moins à certaines valeurs desdits un ou plusieurs paramètres météorologiques (52).

6. Procédé (400) selon l'une quelconque des revendications 1 à 5, ladite pluralité de valeurs d'évaluation antérieures (94) calculées pour une zone de service particulière (26) par rapport à la pluralité d'intervalles de temps précédents (100) comprenant un ensemble en cours d'exécution de valeurs d'évaluation antérieures (94) correspondant à une fenêtre en cours d'exécution d'intervalles de temps précédents (100).

7. Procédé (400) selon l'une quelconque des revendications 1 à 6, ladite valeur de référence (98) pour chaque zone de service (26) et chaque intervalle de temps (100) étant une valeur numérique présentant un rang centile défini par rapport à une pluralité correspondante de valeurs d'évaluation antérieures (94) calculées pour la zone de service (26) par rapport à une pluralité correspondante d'intervalles de temps précédents (100).

8. Procédé (400) selon l'une quelconque des revendications 1 à 7, ledit paramètre de liaison satellite étant un débit de symboles de canal domestique (HCSR) adaptable, et, pour chaque zone de service (26) et chaque intervalle de temps (100), lesdites valeurs surveillées (92) étant les HCSR des terminaux respectifs parmi les terminaux d'abonnés (24) dans la zone de service (26) pendant la totalité ou une partie de l'intervalle de temps (100), éventuellement ladite valeur d'évaluation (94) pour chaque zone de service (26) et chaque intervalle de temps (100) étant calculée sous la forme de la moyenne pondérée des HCSR lors de l'utilisation par des nombres respectifs de terminaux d'abonnés (24) fonctionnant dans la zone de service (26).

9. Procédé (400) selon l'une quelconque des revendications 1 à 8, comprenant en outre la mise en corrélation des événements d'interruption de service détectés pour une quelconque zone de service particulière (26) avec des indications d'altération des conditions météorologiques pour la zone de service particulière (26), telles qu'indiquées par les paramètres météorologiques correspondants (52) calculés pour la zone de service particulière (26).

10. Procédé (400) selon l'une quelconque des revendications 1 à 9, ledit système de communication par satellite (10) comprenant une pluralité de zones de service (10), et ledit procédé (400) comprenant en outre au moins un non-calcul parmi :
le non-calcul des paramètres météorologiques (52) pour les zones de service (26) qui sont inférieures à un certain seuil de taille de zone de service ; ou
le non-calcul des paramètres météorologiques (52) pour les zones de service (26) au-dessus d'un certain seuil de taille de zone de service.

11. Procédé (400) selon l'une quelconque des revendications 1 à 10, ledit système de communication par satellite (10) comprenant une pluralité de zones de service (10), et ledit procédé (400) comprenant en outre le non-calcul des paramètres météorologiques (52) pour des zones de service (26) comportant des populations (28) de terminaux d'abonnés (24) inférieures à un certain seuil de taille de population.

12. Procédé (400) selon l'une quelconque des revendications 1 à 11, ledit procédé (400) comprenant en outre, par rapport au calcul d'une valeur d'évaluation (94) pour une quelconque zone de service particulière (26) par rapport à un quelconque intervalle de temps particulier (100), l'exclusion de considération des terminaux d'abonnés (24) dans la zone de service particulière (26) qui sont nouvellement entrés dans le système de communication par satellite (10).

13. Procédé (400) selon l'une quelconque des revendications 1 à 12, chaque paramètre météorologique (52) étant calculé sous la forme d'une valeur numérique à l'intérieur d'une plage limitée par un minimum de plage et un maximum de plage, une plage parmi le minimum de plage ou le maximum de plage correspondant à aucun impact météorologique et l'autre parmi le minimum de plage ou le maximum de plage correspondant à un impact météorologique maximal.

14. Système informatique (50) comprenant :
des circuits d'interface (80, 82) ; et
un circuit de traitement (70) servant à déterminer un paramètre météorologique (52) pour chacune d'une ou plusieurs zones de service (26) d'un système de communication par satellite (10), par rapport à chacun d'un ou plusieurs intervalles de temps (100), pour calculer le paramètre météorologique (52) pour chaque zone de service (26) et intervalle de temps (100), ledit circuit de traitement étant configuré pour :
recevoir, par l'intermédiaire des circuits d'interface (80, 82), des valeurs surveillées (92) d'un paramètre de liaison satellite, tel que surveillé pour une population (28) de terminaux d'abonnés (24) dans la zone de service (26), pendant l'intervalle de temps (100) ;
calculer une valeur d'évaluation (94) en fonction des valeurs surveillées (92) ; et **caractérisé en ce qu'**il est en outre configuré pour calculer le paramètre météorologique (52) en fonction de la valeur d'évaluation (94) et d'une valeur de référence (98) qui est déterminée à partir d'une pluralité de valeurs d'évaluation antérieures (94) calculées pour la zone de service (26) par rapport à une pluralité d'intervalles de temps précédents (100).

15. Système informatique (50) selon la revendication 14, ledit circuit de traitement (70) étant configuré, avec les circuits d'interface (80, 82), pour réaliser le procédé selon une ou plusieurs des revendications 2 à 13.
